# NEW EUROPEAN PATENT SPECIFICATION

(11) **EP 0 208 910 B2**
(45) Date of publication and mention of the opposition decision: **11.09.1996**
(45) Mention of the grant of the patent: 12.04.1989
(21) Application number: 86107916.8
(22) Date of filing: 10.06.1986
(51) Int. Cl.: C04B 35/80, C04B 35/10, B23B 27/14

(54) **Fiber-reinforced compositie material for tools**
Faserverstärkter Verbundwerkstoff für Werkzeuge
Matériau composite renforcé par des fibres pour outils

(30) Priority: 10.06.1985 JP 124412/85; 10.06.1985 JP 124413/85; 15.08.1985 JP 178623/85; 15.08.1985 JP 178624/85
(43) Date of publication of application: 21.01.1987
(73) Proprietor: NGK Spark Plug Co. Ltd., Nagoya-shi, Aichi-ken (JP)
(72) Inventor: Suzuki, Junichiro, Mizuho-ku Nagoya-shi Aichi (JP); Nakamura, Minoru, Mizuho-ku Nagoya-shi Aichi (JP)
(74) Representative: Grünecker, Kinkeldey, Stockmair & Schwanhäusser Anwaltssozietät

(56) References cited:
- EP-A- 0 133 864
- EP-A- 0 194 811
- GB-A- 954 285
- US-A- 3 459 842
- US-A- 3 833 389
- US-A- 4 158 687
- US-A- 4 343 909
- US-A- 4 366 254
- US-A- 4 410 635
- US-A- 4 463 058
- US-A- 4 464 192
- US-A- 4 485 179
- US-A- 4 507 224
- US-A- 4 526 875
- CHEMICAL ABSTRACTS, vol. 102, no. 20, May 1985, page 302, abstract no. 171498x, Columbus, Ohio, US; & JP-A-60 05 079 (MITSUBISHI METAL CORP.) 11-01-1985
- Kieffer-Benesovsky "Hartmetalle" (Springer-Verlag 1965)

## Description

### Field of the Invention

The present invention relates to an alumina ceramic material having a high density and high toughness. More particularly, it relates to a ceramic composition from which tools reinforced with SiC whiskers can be produced. The composition of the invention also includes a SiC whisker-reinforced composition having a high density and high toughness suitable tor high-speed cutting of steel and cast iron.

### Background of the Invention

Alumina is typical ceramic material. Because of its outstanding heat resistance and corrosion resistance, it is expected to find use as a tool and the like if its strength is enhanced. In addition, alumina has outstanding oxidation resistance at the time of high-speed cutting. low chemical reactivity with iron, and a low coefficient of friction. For these reasons, alumina is predominant in the aluminum oxide-based cutting tools now in use as the high-speed cutting tool. However, aluminum oxide is not satisfactory in heat shock resistance and mechanical performance at high temperatures; therefore, aluminum oxide-based cutting tools do not easily and stably cut steel at high speeds.

Recently, fiber-reinforced ceramics (FRC) has attracted attention because the fiber reinforcement effectively prevents the deterioration of toughness of the ceramics at high temperatures, and its application to tools is expected.

Tools made of aluminum oxide alone are considerably limited in their usage because of their low toughness. In order to eliminate this disadvantage, extensive research has been carried out. As the result, there has been proposed a composite material composed of Al₂O₃ as a matrix and SiC whiskers dispersed in the matrix. As compared with the conventional Al₂O₃ sintered body, this composite material has improved toughness and hardness. However, its performance is not satisfactory so as to meet the requirements for practical use. Investigations revealed that this is attributable to a poor affinity of SiC whiskers for Al₂O₃, which does not produce the reinforcing effect of dispersed whiskers. In other words, SiC has an inherently poor affinity for Al₂O₃ and whiskers have very few lattice defects essential for sintering, which disrupts the affinity between the two constituents. In the conventional technology, this drawback has been eliminated by increasing the amount of sintering assistant and increasing the sintering temperature more than in the production of ordinary Al₂O₃ sintered bodies, or by employing pressure sintering.

On the other hand, composite ceramics formed by dispersing zirconia in alumina are known to have an improved toughness because of the crystal modification of zirconia. The improvement of toughness takes place through the non-diffusion lattice modification in which the tetragonal system of zirconia changes into the monoclinic system while the sintered body is cooled and also through the mutual reaction between the dispersed zirconia and the matrix. This method is very effective in improving the toughness at room temperature. However, the improvement of toughness through the modification of ZrO₂ does not take place satisfactorily at high temperatures. Thus, the alumina-zirconia composite ceramics have been limited in usage as tools which are used at high temperatures.

Recently, reinforcement with fiber is considered to be a promising means to reinforce ceramics. It is also considerec to be an effective means for the prevention of the deterioration of toughness at high temperatures. In the case of Al₂O₃-ZrO₂ ceramics however. SiC whiskers do not provide satisfactory reinforcement. This is because SiC has an inherently poor affinity for Al₂O₃-ZrO₂ and SiC whiskers have very few lattice defects essential for sintering, which disrupts the affinity between the two constituents. Therefore, it has been considered that when Al₂O₃-ZrO₂ is incorporated with whiskers, it is necessary to increase the sintering temperature, to employ pressure sintering, or to excessively sinter the matrix.

Tools made of aluminum oxide alone are considerably limited in their usage because of their low toughness. In order to eliminate this disadvantage, extensive reseraches have been made. As the result, it has been found that Al₂O₃-ZrO₂ ceramics are greatly improved in toughness and hardness when they are incorporated with a metal oxide, nitride, carbide, or boride. In addition, tools of Al₂O₃-TiC are now in practical use. Although these composite materials are considerably improved in toughness, the improvement is not enough to meet the market requirements. Investigations have revealed that this is because Al₂O₃-ZrO₂ is not satisfactorily reinforced with the dispersed SiC whiskers. In the conventional technology, tnis drawback has been eliminated by increasing the amount of sintering assistant and increasing the sintering temperature more than in the production of ordinary Al₂O₃ sintered bodies, or by employing pressure sintering.

### Detailed Description of the Invention

According to the present invention, basic components of the ceramic composition comprises IA) 5 to 50 wt % of SiC whisker; (B) 0.1 to 7 wt% of additives comprising one or more oxides selected from the group consisting of CaO, MgO, SiO₂, NiO, Y₂O₃ and lanthanide oxide; and (E) not less than 30 wt% of Al₂O₃.

Beside these the ceramic composition of the present invention includes at least one of components (C) and (D) wherein (C) is 0.05 to 7 wt% of one or more of components selected from the group consisting of B. C, AlN, B₄C and boride of Si, Al, Y and lanthanide and (D) is 0.05 to 40 wt % oxide, carbide, nitride, boride of a transition metal belonging to Groups IVa, Va, and Vla of the Periodic Table.

When (C) and or (D) are contained in the composition, total amount percent is adjusted with the amount of Al₂O₃, provided that amount of Al₂O₃ should be not less than 30 wt% of the composition. Furthermore 3-40 wt % of ZrO₂ are comprised.

The preferable components of the present invention are as follows.

SiC whisker may be α- or β-form and a mixture thereof which is fibrous having 0.2 µm or more in an average diameter, from 10 to 100 µm in length, from 10 to 50 of aspect ratio, and 3.2 g/cm² of density. A thicker fiber in a diameter is preferable. A spherical grain may be contained in less than 30 wt% of the total SiC material.

The additives (C) should be 99% or higher in purity and powder having 2 µm or smaller of particle size.

The components (D) which comprise oxides, carbides, nitrides, borides are of particulate material having 5 µm or smaller of particle size and 99% or higher in purity. When coarse raw material is used, it should be pulverized in advance of mixing singly or with other component than whisker.

According to this invention, the SiC whiskers get entangled with the dispersed phase (D). effectively improving its toughness and increasing its hardness. The dispersed phase (C) enhances the effect of the dispersed phase (D).

The Al₂O₃ may be of α- or β-form powder having to 0.1 to 1 µm of an average particle size, which may be previously doped with additives (B) comprising CaO, MgO, SiO₂, NiO, Y₂O₃ and lanthanide oxide. The amount of Al₂O₃ constituting the matrix may have a specific range the matrix is not effectively formed: and if it is more than 80 wt %, according to amount of other ingredients to be incorporated to produce the desired effect.

The oxide, nitride, boride or carbide of the transition metal belonging to Groups IVa, Va, and Vla of the Periodic Table, which forms the first dispersed phase (D), should be added in an amount of 0.05 to 40 wt%, preferably 0.5 wt % to 40 wt%. With less than 0.5 wt % of nitride or carbide of a transition metal, it does not produce the desired effect, and with more than 40 wt%, it decreases toughness. A boride of a transition metal in an amount less than 0.05 wt % does not produce the desired effect. and with an amount more than 40 wt %, it decreases toughness.

Incidentally, the transition metals denote, for example, Ti and Zr (Group IVa), V and Nb (Group Va), and Cr and Mo (Group VIa).

ZrO₂ is used as crystal modification in Al₂O₃ as mentioned above, and it improves toughness through the reaction with the Al₂O₃. In the Al₂O₃-ZrO₂ matrix with less than 3 wt%, it does not produce a marked effect. The preferred amount is 7 wt%. With more than 40 wt%, the ceramic material does not have sufficient strength. Especially, ZrO₂ more than 40 wt% lowers the abrasion resistance of the ceramics material.

CaO, MgO, SiO₂, NiO, Y₂O₃, or lanthanide oxide, as the sintering assistant, is effective in sintering Al₂O₃. If its amount added is less than 0.5 wt%, the desired effect is not produced, and with more than 7 wt%, toughness descreases.

The SiC whiskers, which form the dispersed phase (A), should be added in an amount of 5 wt% to 50 wt%. With less than 5 wt%, the desired reinforcing effect is not produced, and with more than 50 wt %, the sinterability is poor.

Al, AlN, B, C, B₄C, or a boride of Si, Al, Y, lanthanide, or actinide, which forms the dispersed phase (C), promotes the dispersion of the SiC whiskers. With an amount less than 0.05 wt%, it does not produce a pronounced effect; and with an amount more than 7 wt%, it is likely to form a compound with SiC, lowering the interfacial strength between the matrix and the whiskers.

According to one aspect of the present invention, Al₂O₃ is incorporated with ZrO₂ to give a ceramic having an improved toughness. The ceramic is further incorporated with SiC whiskers to increase toughness. The affinity of these components is improved by adding B, C, AIN, B₄C, or a boride of Si, Al, Y, lanthanide of a transition metal belonging to Group IVa, Va, and VIa of the Periodic Table. The ceramic is also incorporated with CaO,, MgO, SiO₂, NiO, Y₂O₃, or a lanthanide oxide, which prevents the growth of the crystal grains of alumina and promotes sintering. Therefore, the ceramics composition of this invention is suitable for the manufacture of tools.

As mentioned above, the sintered material of this invention has superior abrasion resistance and heat shock resistance. Therefore, it is suitable as a high-speed cutting tool for steel and cast iron. It also exhibits superior performance when used as a tool for hot working and as a tool for manufacturing various parts.

The invention is now described in more detail with reference to the following examples, which should not be construed as limiting the scope of the invention.

### Example 1 and Comparative Example 1

A body powder ready to sinter was prepared by mixing the following components in a ball mill for 2 hours, followed by drying.
(1) Al₂O₃ powder having an average particle size of 0.7 µm.
(2) ZrO₂ powder having an average particle size of 0.2 µm. (The ratio of Al₂O₃ to ZrO₂ is 2:1 by weight.)
(3) SiC whisker having a diameter of 0.1 to 1.0 µm (mostly 0.2 to 0.5 µm), a length of 50 to 200 µm, an aspect ratio of 50 to 300. and a density of 3.19 g/cm³.
(4) Sintering assistant (CaO, MgO, SiO₂, NiO. Y₂O₃, or lanthanide oxide) having an average particle size of 0.5 to 1.5 µm.
(5) B, AlN, B₄C, or a boride of Si, Y, lanthanide, or a transition metal belonging to Groups IVa, Va, and Vla having an average particle size of 0.5 to 5 µm

The mixing ratios of these components are shown in Table 1.

The body powder was sintered in a graphite mold by pressure sintering method under a pressure of 200 kg/cm² (19.6 MPal for 15 minutes. The sintering temperature is shown in Table 1.

The resulting sintered body was ground by using a diamond wheel to achieve SNGN 432 TN and a surface roughness lower than 3S (according to JIS). The ground sample was examined for hardness. The ground sample was also subjected to a cutting test under the following conditions. The results are shown in Table 1.
Work: FC 23
Cutting conditions: Cutting speed (V) = 150 m/min Feed rate (f) = 0.6 mm rev Depth of cut (t) = 2 mm
Judgement of life: The life is judged by counting the number of raised parts which can be formed by cutting a rod 120 mm in diameter until failure occurs. (Each raised part is 10 mm wide and the raised parts are formed at intervals of 5 mm.)

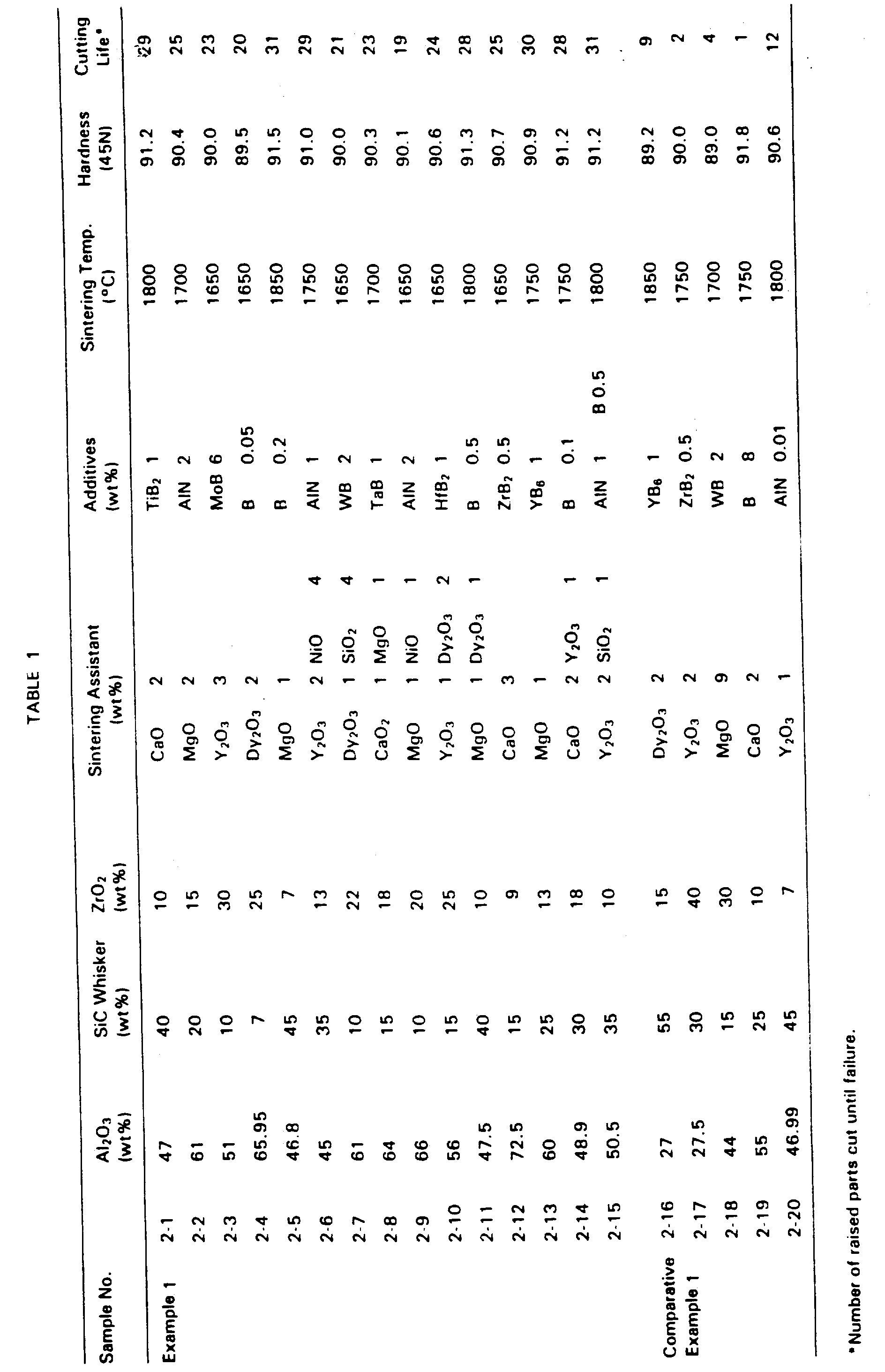

### Example 2 and Comparative Example 2

A body powder ready to sinter was prepared by mixing the following components in a ball mill for 12 hours, followed by drying.
(1) Al₂O₃ powder having an average particle size of 0.7 µm.
(2) ZrO₂ powder having an average particle diameter of 0.6 µm.
(3) SiC whisker having a diameter of 0.1 to 1.0 µm (mostly 0.2 to 0.5 µm), a length of 50 to 200 µm, an aspect ratio of 50 to 500, and a density of 3.19 g/cm₃.
(4) Sintering assistant (MgO, CaO, Y₂O₃, or lanthanide oxide) having an average particle size smaller than 2 µm.
(5) Oxide, nitride, carbide. or boride of a transition metal belonging to Groups IVa, Va, and Vla of the Periodic Table having an average particle size of 0.5 to 2 µm.
(6) AlN, B, C, B₄C, or a boride of Si, Al, Y, lanthanide, or actinide having an average particle size of 0.5 to 2 µm.

The mixing ratios of these components are shown in Table 2.

The body powder was molded and sintered in either of the following manners.

### (a) Hot-pressing:

The body powder was sintered in a graphite mold under a pressure of 200 kg/cm² (19.6 MPa) for 15 minutes. The sintered temperature is shown in Table 2.

### (b) Hot hydrostatic pressing:

The body powder was incorporated with 4 wt% of paraffin, and the mixture was passed through a 60-mesh sieve. The powder was subjected to pressure molding under a pressure of 1 ton/cm² (98 MPa), and the compact was sintered in an atmosphere of argon under reduced pressure for hour. The sintering temperature is shown in Table 2. The resulting sintered body was fired by hot hydrostatic pressing at 1550°C and 1500 atm (152 MPa), for 1 hour.

The resulting sintered body had substantially the same composition as the body powder. In Comparative Examples, the content of the constituent outside the range specified in this invention is marked with an asterisk.

The resulting sintered body was ground by using a diamond wheel to achieve SNGN 432 TN and a surface roughness lower than 3S (according to JIS). The ground sample was examined for hardness. The ground sample was also subjected to a cutting test under the following conditions. The results are shown in Table 2.
Work: SCM420, carburized and hardened (Hv720) Cutting speed (V): 120 m/min
Feed rate (f) = 0.1 mm/rev
Depth of cut (t) = 0.3 mm
Cutting fluid: water-soluble
Judgement of life (min): Time of cutting until failure occurs. As shown in Table 2 the sintered material of this invention is superior to the one in Comparative Example in abrasion resistance and cutting performance.

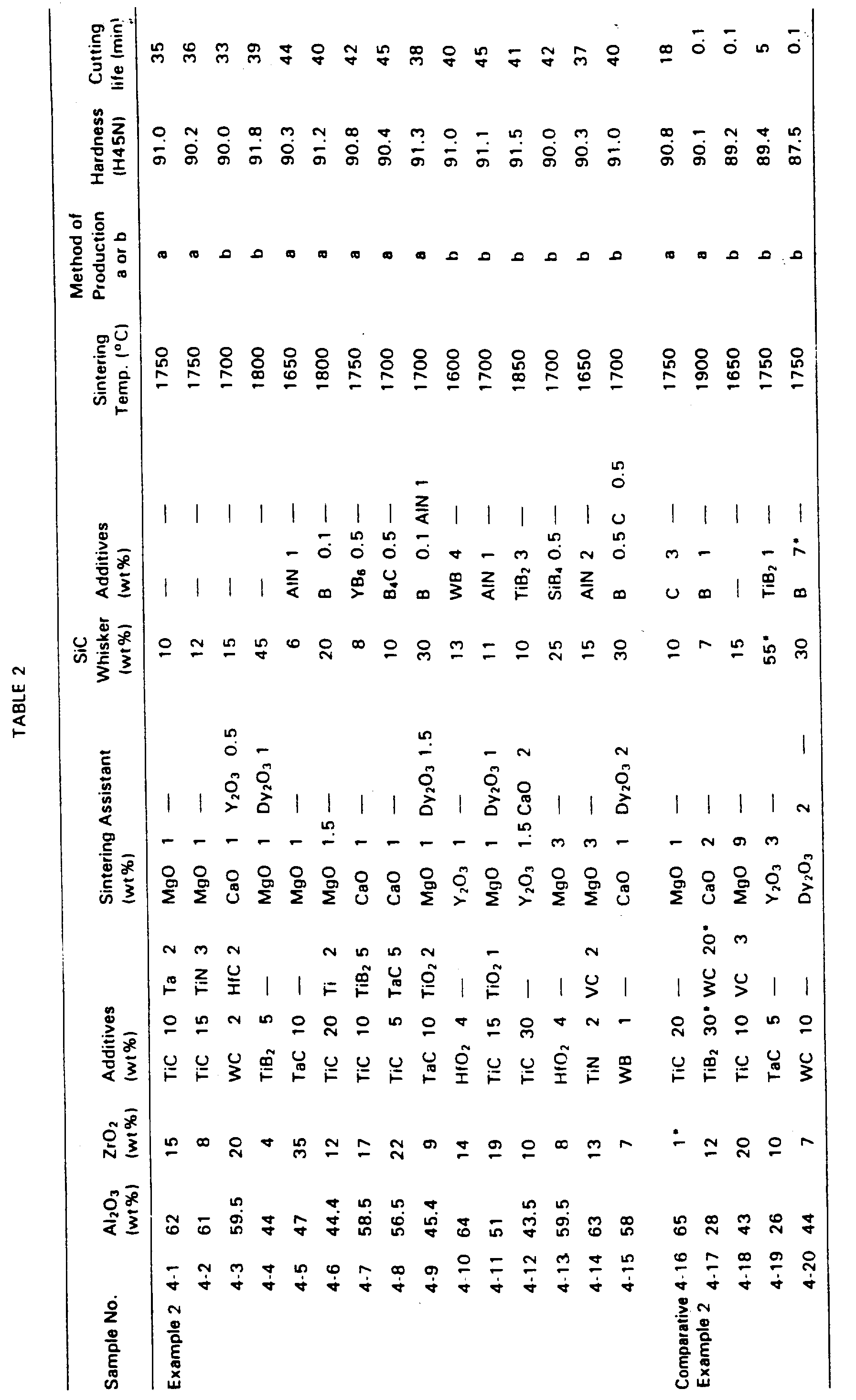

## Claims

1. A fiber-reinforced ceramic material for tools comprising 5 to 50 wt% of SiC whiskers; 7 to 35 wt% of ZrO₂; 0.1 to 7 wt% of one or more oxides selected from the group consisting of CaO, MgO, SiO₂, Nio, Y₂O₃ and lanthanide oxide; 0.05 to 7 wt% of one or more components selected from the group consisting of B, C, AlN, B₄C and borides of Si, Al, Y, lanthanide or of a transition metal belonging to Groups IVa, Va and VIa of the Periodic Table; and the balance of Al₂O₃.

2. A fiber-reinforced ceramic material for tools comprising 5 to 50 wt% of SiC whiskers; 0.1 to 7 wt% of one or more oxides selected from the group consisting of MgO, CaO, Y₂O₃ and lanthanide oxide; 0.5 to 40 wt% of one or more components selected from the group consisting of an oxide, nitride and carbide of a transition metal belonging to Groups IVa, Va and VIa of the Periodic Table or 0.05 to 40 wt% of one or more components selected from the group consisting of borides of said metals; 3 to 40 wt% of ZrO₂; and 30 to 80 wt% of Al₂O₃.

3. A fiber-reinforced ceramic material for tools comprising 5 to 50 wt% of SiC whiskers; 0.1 to 7 wt% of one or more oxides selected from the group consisting of MgO, CaO, Y₂O₃ and lanthanide oxide; 0.5 to 40 wt% of one or more components selected from the group consisting of an oxide, nitride and carbide of a transition metal belonging to Groups IVa, Va and VIa of the Periodic Table or 0.05 to 40 wt% of one or more components selected from the group consisting of borides of said metals; 0.05 to 5 wt% of one or more components selected from the group consisting of Al, AlN, B, C, B₄C, and boride of Si, Al, Y, lanthanide, or actinide; 3 to 40 wt% of ZrO₂; and 30 to 80 wt% of Al₂O₃.

## Patentansprüche

1. Faserverstärktes Keramikmaterial für Werkzeuge, enthaltend 5 bis 50 Gew.-% SiC-Fasern; 7 bis 35 Gew.-% ZrO₂; 0,1 bis 7 Gew.-% wenigstens eines Oxides, ausgewählt aus der aus CaO, MgO, SiO₂, Nio, Y₂O₃ und Lanthanoidoxid bestehenden Gruppe; 0,05 bis 7 Gew.-% wenigstens einer Komponente, ausgewählt aus der aus der aus B, C, AlN, B₄C sowie Boriden des Si, Al, Y, Lanthanoid oder einem Übergangsmetall der Gruppen IVa, Va und VIa des Peroidischen Systems der Elemente bestehenden Gruppe, Rest Al₂O₃.

2. Faserverstärktes Keramikmaterial für Werkzeuge, enthaltend 5 bis 50 Gew.-% SiC-Fasern, 0,1 bis 7 Gew.-% wenigstens eines Oxides, ausgewählt aus der aus MgO, CaO, Y₂O₃ und Lanthanoidoxid bestehenden Gruppe; 0,5 bis 40 Gew.-% wenigstens einer Komponente, ausgewählt aus der aus einem Oxid, Nitrid und Carbid eines Übergangsmetalls der Gruppen IVa, Va und VIa des Periodischen Systems der Elemente bestehenden Gruppe oder 0,05 bis 40 Gew.-% wenigstens einer Komponente, ausgewählt aus der aus den Boriden der genannten Metalle bestehenden Gruppe; 3 bis 40 Gew.-% ZrO₂; und 30 bis 80 Gew.-% Al₂O₃.

3. Faserverstärktes Keramikmaterial für Werkzeuge, enthaltend 5 bis 50 Gew.-% SiC-Fasern, 0,1 bis 7 Gew.-% wenigstens eines Oxides, ausgewählt aus der aus MgO, CaO, Y₂O₃ und Lanthanoidoxid bestehenden Gruppe; 0,5 bis 40 Gew.-% wenigstens einer Komponente, ausgewählt aus der aus einem Oxid, Nitrid und Carbid eines zu den Gruppen IVa, Va sowie VIa des Periodischen Systems der Elemente gehörenden Übergangsmetalls bestehenden Gruppe oder 0,05 bis 40 Gew.-% wenigstens einer Komponente, ausgewählt aus der aus den Boriden dieser Metalle bestehenden Gruppe; 0,05 bis 5 Gew.-% wenigstens einer Komponente, ausgewählt aus der aus Al, AlN, B, C, B₄C sowie den Boriden des Si, Al, Y, Lanthanoid oder Actinoid bestehenden Gruppe, 3 bis 40 Gew.-% ZrO₂; und 30 bis 80 Gew.-% Al₂O₃.

## Revendications

1. Matériau céramique pour outils renforcé par des fibres comprenant de 5 à 50 % en poids de trichites de SiC ; de 7 à 35 % en poids de ZrO₂ ; de 0,1 à 7 % en poids d'un ou plusieurs oxydes choisis parmi CaO, MgO, SiO₂, NiO, Y₂O₃ et les oxydes de lanthanides ; de 0,05 à 7 % en poids d'un ou plusieurs composants choisis parmi B, C, AlN, B₄C et les borures de Si, d'Al, d'Y et des lanthanides ou des métaux de transition appartenant aux groupes IVa, Va et Via de la Classification Périodique ; et le complément d'Al₂O₃.

2. Matériau céramique pour outils renforcé par des fibres comprenant de 5 à 50 % en poids de trichites de SiC ; de 0,1 à 7 % en poids d'un ou plusieurs oxydes choisis parmi MgO, CaO, Y₂O₃ et les oxydes de lanthanides ; de 0,5 à 40 % en poids d'un ou plusieurs composants choisis parmi les oxydes, nitrures et carbures des métaux de transition appartenant aux groupes IVa, Va et Via de la Classification Périodique ou de 0,05 à 40 % en poids d'un ou plusieurs composants choisis parmi les borures desdits métaux ; de 3 à 40 % en poids de ZrO₂ ; et de 30 à 80 % en poids d'Al₂O₃.

3. Matériau céramique pour outils renforcé par des fibres comprenant de 5 à 50 % en poids de trichites de SiC ; de 0,1 à 7 % en poids d'un ou plusieurs oxydes choisis parmi MgO, CaO, Y₂O₃ et les oxydes de lanthanides ; de 0,5 à 40 % en poids d'un ou plusieurs composants choisis parmi les oxydes, nitrures et carbures des métaux de transition appartenant aux groupes IVa, Va et Via de la Classification Périodique ou de 0,05 à 40 % en poids d'un ou plusieurs composants choisis parmi Al, AlN, B, C, B₄C et les borures de Si d'Al, d'Y, de lanthanides ou d'actinides ; de 3 à 40 % en poids de ZrO₂ et de 30 à 80 % en poids d'Al₂O₃.
